(19) Europäisches Patentamt
European Patent Office
Office européen des brevets

(11) **EP 4 306 195 B1**

(12) **EUROPÄISCHE PATENTSCHRIFT**

(45) Veröffentlichungstag und Bekanntmachung des Hinweises auf die Patenterteilung:
**13.08.2025 Patentblatt 2025/33**

(21) Anmeldenummer: **23182939.1**

(22) Anmeldetag: **01.07.2023**

(51) Internationale Patentklassifikation (IPC):
***B01D 46/00*** *(2022.01)* ***A47L 9/19*** *(2006.01)*
***B01D 46/44*** *(2006.01)*

(52) Gemeinsame Patentklassifikation (CPC):
**B01D 46/0086; B01D 46/446**

(54) **VERFAHREN ZUR VERÄNDERUNG DES VOLUMENSTROMS EINES GASFÖRMIGEN FLUIDS**

METHOD FOR CHANGING THE VOLUMETRIC FLOW RATE OF A GASEOUS FLUID

PROCÉDÉ DE MODIFICATION DU DÉBIT VOLUMIQUE D'UN FLUIDE GAZEUX

(84) Benannte Vertragsstaaten:
**AL AT BE BG CH CY CZ DE DK EE ES FI FR GB GR HR HU IE IS IT LI LT LU LV MC ME MK MT NL NO PL PT RO RS SE SI SK SM TR**

(30) Priorität: **11.07.2022 AT 505122022**

(43) Veröffentlichungstag der Anmeldung:
**17.01.2024 Patentblatt 2024/03**

(73) Patentinhaber: **Aigner GmbH**
**4623 Gunskirchen (AT)**

(72) Erfinder: **Aigner, Heinz**
**4600 Wels (AT)**

(74) Vertreter: **Fabian, Ferdinand**
**Fabian & Schögl Patentanwälte OG**
**Kollmannsberg 57**
**4814 Neukirchen bei Altmünster (AT)**

(56) Entgegenhaltungen:
WO-A1-2015/078672      CN-A- 112 065 617
DE-A1- 102017 006 400      US-A1- 2010 017 151
US-A1- 2011 238 331

**Beschreibung**

Die Erfindung betrifft ein Verfahren zur Bestimmung einer Steuer- und/oder Regelgröße für die Veränderung des Volumenstroms eines gasförmigen Fluids durch eine Vorrichtung zur Abtrennung eines Stoffes aus einem gasförmigen Fluid, wobei das Fluid mit zumindest einer ein Antriebselement aufweisenden Saugvorrichtung durch zumindest eine Einlassöffnung der Vorrichtung angesaugt und in einer Strömungsrichtung durch zumindest ein Filterelement gesaugt wird, wobei das Filterelement in der Strömungsrichtung vor der Saugvorrichtung angeordnet wird.

Weiter betrifft die Erfindung eine Vorrichtung zur Abtrennung eines Stoffes aus einem gasförmigen Fluid, umfassend ein Filterelement oder in einer vorgesehenen Strömungsrichtung des gasförmigen Fluids durch die Vorrichtung mehrere hintereinander angeordnete Filterelemente, und zumindest eine Saugvorrichtung, die zumindest ein Saugelement mit zumindest einem Antriebselement und zumindest einen Regler zur Einstellung einer Steuer- und/oder Regelgröße für die Veränderung des Volumenstroms des gasförmigen Fluids durch eine Vorrichtung aufweist, sowie mit einem Drucksensor zur Messung eines Druckverlusts in der Vorrichtung.

Vorrichtungen zur Abscheidung von Feststoffen aus einem Gasstrom sind in der Technik weit verbreitet und oftmals beschrieben worden. Unter anderem sind auch modular aufgebaute Systeme bekannt. So beschreibt die DE196 45 096 A1 ein Luftreinigungsgerät mit einem Ansaugteil, einem Ventilatorgehäuse mit einem oder mehreren Ventilatoren und ein oder mehrere, vor oder nach dem Ventilator angeordnete, Luftfilter. Das Gerät weist ein mit einem Sockel ausgebildetes Gehäuse aus turmartig übereinander angeordneten, im Dichtsitz ineinandergreifenden und voneinander leicht lösbaren, modulartig ausgebildeten Funktionsteilen auf, die mit mindestens einem, am seitlichen Teil des Gehäuses mittels einer Schwenkaufnahme schwenkbar angeordneten Schwenkhebel zusammengespannt sind. Der Schwenkhebel umgreift dabei alle Teile des Gehäuses von außen.

Bekanntlich treten in realen Strömungen Druckverluste auf, die zusätzlich von der Saugvorrichtung derartiger Filteranlagen überwunden werden müssen. In der Regel wird dabei zur Messung des Druckverlustes die Differenzdruckmessung des Filterwiderstandes angewandt. Aus dem Filterwiderstand kann auf den Verschmutzungsgrad des Filterelements geschlossen werden. Je höher der Widerstand ist, verglichen mit dem Wert eines sauberen Filterelementes gleicher Filterklasse, desto mehr aus dem Gas gefiltertes Material befindet sich auf dem Filterelement. Demzufolge kann man diese Druckverlustwerte zur Steuerung der Leistung eines Antriebs der Saugvorrichtung heranziehen, um damit die Anlage immer in einem optimalen Parameterbereich betreiben zu können. US 2011/238331 A1, CN 112 065 617 A, US 2010/017151 A1, DE 10 2017 006400 A1 und WO 2015/078672 A1 zeigen weitere relevante Beispiele.

Der vorliegenden Erfindung liegt die Aufgabe zu Grunde, den Aufbau derartiger Filtervorrichtungen zu vereinfachen.

Die Erfindung wird durch den Gegenstand der Ansprüche 1-14 beschrieben.

Die Aufgabe der Erfindung wird mit dem eingangs genannten Verfahren gelöst, das folgende Schritte umfasst:

a. Festlegung einer Mutterkurve der Saugvorrichtung, die die Abhängigkeit des Volumenstroms VM an gasförmigem Fluid vom Fluiddruck $p_M$ in der Saugvorrichtung wiedergibt;
b. Messung des Ist-Wertes des Gesamtdruckverlustes $p_I$ der Vorrichtung mit einem Drucksensor;
c. Erfassung einer von einem Regler der Saugvorrichtung ausgegebenen Steuerspannung zum Zeitpunkt der Messung des Gesamtdruckverlustes der Vorrichtung;
d. Berechnung einer Ist-Drehzahl $n_I$ des Antriebselements der Saugvorrichtung mit der Formel

$$n_I = k \times \text{Steuerspannung} - z,$$

wobei k die Steigung der Kennlinie und z eine Verschiebungskonstante bedeuten;
e. Berechnung des zum gemessenen Ist-Wert des Gesamtdruckverlustes $p_I$ der Vorrichtung zugehörigen Druckverlustes der Mutterkurve $p_M$ bei der vom Regler der Saugvorrichtung ausgegebenen Steuerspannung zum Zeitpunkt der Messung des Gesamtdruckverlustes der Vorrichtung mit der Formel

$$p_M = (n_M/n_I)^2 \times p_I$$

wobei $n_M$ die Drehzahl des Antriebselements bei einer der Mutterkurve entsprechenden Steuerspannung bedeutet, berechnet mit der unter Punkt d. wiedergegebenen Formel und/oder als Zahlenwert in einem elektronischen Speicherelement der Vorrichtung zur Abtrennung eines Stoffes aus einem gasförmigen Fluid hinterlegt;
f. Berechnung des Volumenstroms $V_m$ der Mutterkurve beim Druckverlust der Mutterkurve $p_M$;
g. Berechnung des Ist-Wertes des Volumenstroms $V_I$ bei der vom Regler ausgegebenen Steuerspannung mit der Formel;

$$V_I = (n_I/n_M) \times V_M$$

h. Vergleich des Ist-Wertes des Volumenstroms $V_I$ mit einem Soll-Wert des Volumenstroms;

i. Gegebenenfalls Änderung der Steuerspannung zur Änderung der Drehzahl der Saugvorrichtung und/oder zur Änderung des Gesamtdruckverlusts der Vorrichtung.

Weiter wird die Aufgabe der Erfindung mit der eingangs genannten Vorrichtung gelöst, bei der vorgesehen ist, dass ausschließlich ein Drucksensor zur Messung eines Druckverlusts in der Vorrichtung vorgesehen ist, der zwischen der Saugvorrichtung und dem Filterelement oder dem der Saugvorrichtung am nächsten angeordneten Filterelement der mehreren Filterelemente angeordnet ist.

Von Vorteil ist dabei, dass es mit dem Verfahren ermöglicht wird, den Gesamtdruckverlust der Filteranlage bis zur Saugeinrichtung, also über sämtliche Filterelemente (und bis zum Verursacher der Luftverunreinigung, also beispielsweise bis zur Absaugung an einer Maschine), mit nur einem einzigen Drucksensor zu messen. Dies wiederum ermöglicht einen deutlich einfacheren Aufbau der Vorrichtung bis zur Saugeinrichtung, da nicht mehr zumindest zwei Messstellen vorgesehen werden müssen, um den Differenzdruck eines Filterelementes oder aller Filterelemente zu messen. Wenn dieser über alle Filterelemente mit zwei Messstellen gemessen wird, muss eine entsprechende Strömungsverbindung hergestellt werden, um den Druckverlust mit einem Differenzdrucksensor zu messen. All dies ist mit der Erfindung nicht notwendig, sodass die Technik zur Steuerung und/oder Reglung kompakter ausgeführt werden kann.

Gemäß einer Ausführungsvariante der Erfindung kann vorgesehen sein, dass die Mutterkurve der Saugvorrichtung mit der Formel

$$V_M = A \times p_M{}^5 + B \times p_M{}^4 + C \times p_M{}^3 + D \times p_M{}^2 + E \times p_M{}^1 + F \times p_M{}^0,$$

berechnet wird, wobei A, B, C, D, E und F Koeffizienten sind und $p_M$ den Druck, den die Saugvorrichtung bei einer definierten Steuerspannung erzeugt, bedeuten. Es ist damit einfacher möglich, in der Vorrichtung unterschiedliche Saugvorrichtungen vorzusehen bzw. eine Saugvorrichtung durch eine andere Saugvorrichtung auszutauschen, womit die Vorrichtung besser auf konkrete Einsatzgebiete angepasst werden kann, insbesondere wenn die Vorrichtung zur Abtrennung eines Stoffes aus einem gasförmigen Fluid modular aufgebaut ist.

Zur Verkürzung der Reaktionszeit bzw. zur Vereinfachung der Abläufe kann nach einer anderen Ausführungsvariante der Erfindung vorgesehen sein, dass die Schritte e. und f. in einem Schritt mit der Formel

$$V_I = V_M / \sqrt{(P_M/P_I)}$$

kombiniert werden.

Nach einer anderen Ausführungsvariante der Erfindung kann vorgesehen sein, dass die Mutterkurve bei der maximalen Steuerspannung definiert wird, bis zu der die Drehzahl der Antriebseinrichtung in Abhängigkeit vom Gesamtdruckverlustes $p_I$ der Vorrichtung konstant gehalten werden kann, da damit die Regelgenauigkeit verbessert werden kann.

Aus dem gleichen Grund kann entsprechend einer weiteren Ausführungsvariante der Erfindung vorgesehen sein, dass die Formel

$$n_I = k \times \text{Steuerspannung} - z$$

ausschließlich für jenen Bereich der Saugeinrichtung angewandt wird, deren untere Grenze $n_{uG}$ durch den Wert der Steuerspannung definiert ist, bei der die Saugvorrichtung anspricht, und deren obere Grenze $n_{oG}$ durch den Wert der Steuerspannung definiert ist, die der maximalen Drehzahl der Antriebsvorrichtung entspricht.

Zur weiteren Verbesserung des Regelverhaltens im nichtlinearen Bereich der Kennlinie der Saugvorrichtung kann entsprechend einer Ausführungsvariante der Erfindung vorgesehen sein, dass für eine Drehzahl ab der Drehzahl, bis zu der diese konstant gehalten werden kann, eine zweite Mutterkurve festgelegt wird.

Eine Vereinfachung in der Umsetzung des Verfahrens kann erreicht werden, wenn für einen Bereich mit einer unteren Grenze der Steuerspannung, ab der der Volumenstrom an gasförmigen Fluid durch die Vorrichtung 1 durch eine Drehzahländerung um maximal 1 % erhöht werden kann, eine dritte Mutterkurve festgelegt wird, die entsprechend der voranstehend angegebenen Formel

$$V_M = A \times p_M{}^5 + B \times p_M{}^4 + C \times p_M{}^3 + D \times p_M{}^2 + E \times p_M{}^1 + F \times p_M{}^0,$$

berechnet wird, wobei die Steuerspannung größer ist als die Steuerspannung der zweiten Mutterkurve, und die an die Steuerspannung der zweiten Mutterkurve anschließende nächste halbzahlige oder ganzzahlige Zahl (Steuerspannung) ist.

Nach einer Ausführungsvariante der Vorrichtung zur Abtrennung eines Stoffes aus einem gasförmigen Fluid (im Folgenden nur mehr als Vorrichtung bezeichnet) kann das Filterelement oder jedes der mehreren Filterelemente einen Rahmen aufweisen, der/die einen Teil eines Gehäuses der Vorrichtung bildet/bilden. Es ist damit nicht mehr notwendig, das zumindest eine Filter an sich in ein gesondertes Gehäuse einzusetzen. Vielmehr kann jedes Filterelement damit eine eigenständige Einheit bilden, die auch in unterschiedlichsten Filterkonfigurationen einer derartigen Gasfilteranlage rasch, und ohne weitere Anpassungsmaßnahmen treffen zu müssen, eingesetzt werden kann. Somit kann die Modularität einer Vorrichtung zur Abtrennung eines Stoffes aus einem Gas weiter ausgebaut werden, insbesondere wenn gemäß einer weiteren Ausführungsvariante der Vorrichtung. jedes der Filterelemente ein Filtermodul bildet.

Die Saugvorrichtung selbst kann gemäß einer weiteren Ausführungsvariante der Vorrichtung ebenfalls modulartig als Saugmodul ausgeführt sein. Insbesondere in dieser Ausführungsvariante der Erfindung kommt auch der Vorteil der erfindungsgemäßen Ausführung mit nur einem Drucksensor besonders zur Geltung, da damit die Saugvorrichtung für verschiedenste Konstellationen an unterschiedlich zusammengesetzten Filterelementen eingesetzt werden kann. Eine Adaptierung der Saugvorrichtung kann damit vermieden werden.

Aus diesem Grund kann nach weiteren Ausführungsvarianten der Erfindung vorgesehen sein, dass an dem Saugmodul an einer dem Filtermodul oder den Filtermodulen zugewandten Oberfläche ein Messeingang für den Drucksensor angeordnet ist und/oder dass an dem Saugmodul an einer Seitenfläche oder einer Unterseite eine Schnittstelle zur Messung des Umgebungsdrucks angeordnet ist. Mit letztgenannter Ausführungsvariante kann zudem die Genauigkeit der Steuerung und/oder Regelung verbessert werden, da damit der am jeweiligen Standort der Vorrichtung und während des Betriebes der Vorrichtung vorherrschende Luftdruck als Bezugsnullpunkt herangezogen werden kann.

Gemäß einer weiteren Ausführungsvariante der Erfindung ist der ausschließlich eine Drucksensor ein Unterdrucksensor oder ein Differenzdrucksensor.

Zum besseren Verständnis der Erfindung wird diese anhand der nachfolgenden Figuren näher erläutert.

Es zeigt jeweils in vereinfachter, schematischer Darstellung:

Fig. 1    Eine Vorrichtung zur Abtrennung eines Stoffes aus einem Gas;
Fig. 2    Ein Filtermodul;
Fig. 3    Ein Saugmodul;
Fig. 4    Ein Kennlinienfeld für verschiedene Steuerspannungen;
Fig. 5    Den Verlauf der Drehzahl in Abhängigkeit der Steuerspannung.

Einführend sei festgehalten, dass in den unterschiedlich beschriebenen Ausführungsformen gleiche Teile mit gleichen Bezugszeichen bzw. gleichen Bauteilbezeichnungen versehen werden, wobei die in der gesamten Beschreibung enthaltenen Offenbarungen sinngemäß auf gleiche Teile mit gleichen Bezugszeichen bzw. gleichen Bauteilbezeichnungen übertragen werden können. Auch sind die in der Beschreibung gewählten Lageangaben, wie z.B. oben, unten, seitlich usw. auf die unmittelbar beschriebene sowie dargestellte Figur bezogen und sind diese Lageangaben bei einer Lageänderung sinngemäß auf die neue Lage zu übertragen.

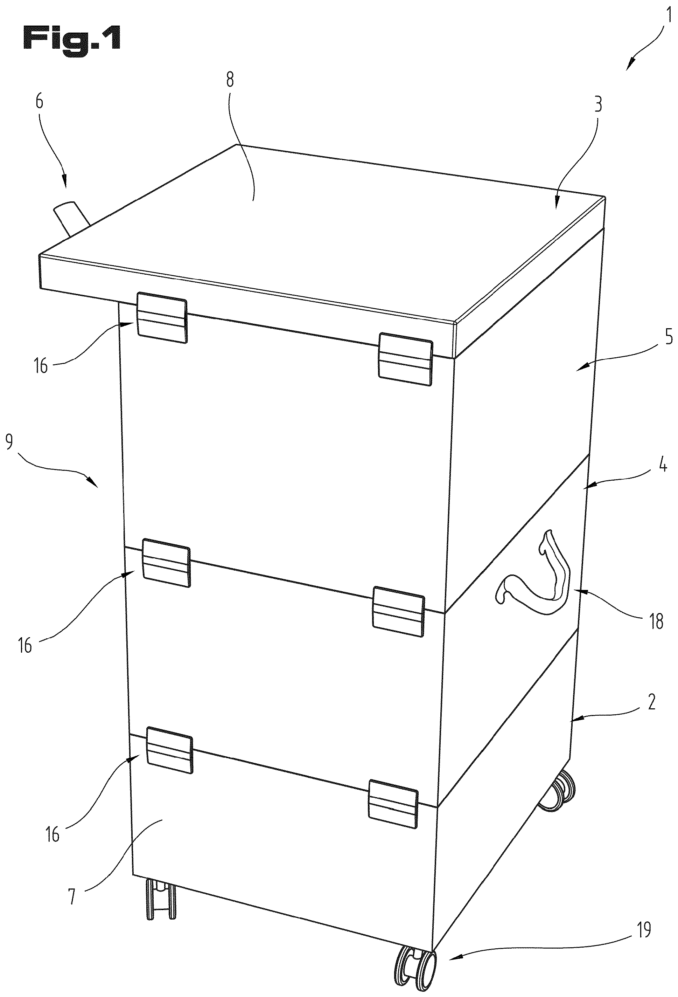

In Fig. 1 ist eine bevorzugte Ausführungsvariante einer Vorrichtung 1 zur Abtrennung eines Stoffes aus einem gasförmigen Fluid bzw. einem Gas (im Folgenden nur mehr als Vorrichtung 1 bezeichnet) dargestellt. Die Vorrichtung 1 kann auch als Luftfilter bezeichnet bzw. eingesetzt werden.

Im Folgenden wird die Erfindung anhand dieser Ausführungsvariante der Vorrichtung 1 erläutert. Die Erfindung ist aber nicht auf diese Ausführungsvariante beschränkt, wenngleich diese Ausführungsvariante in Zusammenhang mit der Erfindung Vorteile hat. Es ist möglich, die Erfindung generell in Vorrichtungen 1 zur Abtrennung eines Stoffes aus einem gasförmigen Fluid einzusetzen, selbst wenn diese nicht modular aufgebaut sind oder wenn diese ein zusätzliches Gehäuse aufweisen.

Die Vorrichtung 1 kann beispielsweise zur Abtrennung von Feststoffen aus Abluft von Schweißanlagen (sogenannter Schweißrauch), von Lötanlagen, von Brenn- und Plasmaschneidanlagen, von Laseranlagen, von Schleifstaub, zur Reinigung von Öl- und Emulsionsnebeln, von Lacknebeln, etc., eingesetzt werden. Dabei können die Partikel in unterschiedlichen Fraktionen abgetrennt werden, beispielsweise als Grobstaub und als Feinstaub. Diese Anwendungen der Vorrichtung 1 sind als Beispiele und das Anwendungsspektrum der Vorrichtung 1 nicht beschränkend zu verstehen. Die Vorrichtung 1 kann auch zur Abtrennung eines Gases aus einem Gasstrom verwendet werden.

Die Vorrichtung 1 nach Fig. 1 umfasst ein Saugmodul bzw. generell eine Saugvorrichtung 2, ein Anschlussmodul 3 und zwei Filtermodule 4, 5 bzw. besteht daraus. Prinzipiell kann in der Vorrichtung 1 eine von zwei verschiedene Anzahl an Filtermodulen 4, 5 vorgesehen sein, beispielsweise nur eines oder drei oder vier oder fünf, etc.

Das Saugmodul, das zumindest eine Filtermodul 4 oder die Filtermodule 4, 5 und das Anschlussmodul 3 sind übereinander angeordnet, wobei das zumindest eine Filtermodul 4 oder die Filtermodule 4, 5 zwischen dem Saugmodul und dem Anschlussmodul 3 angeordnet ist/sind. In der bevorzugten Ausführungsvariante ist das Saugmodul ausschließlich über das Filtermodul 4 oder die mehreren Filtermodule 4, 5 mit dem Anschlussmodul 3 verbunden, sodass zwischen diesen also kein weiteres Verbindungselement vorhanden ist. Es kann aber vorgesehen sein, dass das Saugmodul mit dem Anschlussmodul 3 über ein nicht weiter dargestelltes Verbindungselement, wie beispielsweise einen Verbindungsbügel oder zumindest eine Schraubverbindung, etc., zusätzlich oder alternativ zur Verbindung über das oder die Filtermodule 4, 5 verbunden ist.

Die Module der Vorrichtung 1 sind turmartig übereinander angeordnet. Das Saugmodul ist bevorzugt das unterste Modul der Vorrichtung 1, kann aber gegebenenfalls auch an einer anderen Stelle in der Vorrichtung 1 angeordnet sein, beispielsweise ganz oben.

Das Anschlussmodul 3 bildet vorzugweise den oberen Abschluss der Vorrichtung 1, kann jedoch auch an einer anderen Stelle in der Vorrichtung 1 angeordnet werden. Das Anschlussmodul 3 weist zumindest einen Einlass 6 auf. Über diesen Einlass 6 wird der Vorrichtung 1 das verunreinigte gasförmige Fluid, wie beispielsweise die verunreinigte Luft, zugeführt. Der Einlass 6 kann dazu für den Anschluss einer Leitung für das verunreinigte gasförmige Fluid oder einer Abzugeinrichtung, z.B. einer Abzughaube, vorgesehen sein. In Fig. 1 ist der Einlass 6 seitlich am Anschlussmodul 3 angeordnet. Er kann aber auch oben angeordnet sein.

Es sei an dieser Stelle der Vollständigkeit halber erwähnt, dass die Vorrichtung 1 auch mehr als ein Saugmodul und/oder mehr als ein Anschlussmodul 3 aufweisen kann.

Das Saugvorrichtung 2, d.h. das Saugmodul in der Ausführungsvariante nach Fig. 1, weist ein Saugvorrichtungsgehäuse 7 und das Anschlussmodul 3 ein Anschlussmodulgehäuse 8 auf. Das Saugvorrichtungsgehäuse 7 und das Anschlussmodulgehäuse 8 können beispielsweise aus einem Metall, insbesondere aus einem Blech, gefertigt sein. Das Saugvorrichtungsgehäuse 7 und das Anschlussmodulgehäuse 8 sind bei der Ausführungsvariante der Vorrichtung 1 nach Fig. 1 Teil eines Gehäuses 9 der Vorrichtung 1, das die äußere Hülle der Vorrichtung 1 bildet.

Zur Veränderung bzw. Reduzierung von sogenanntem Strömungsrauschen kann nach einer Ausführungsvariante der Vorrichtung 1 der zumindest eine Einlass 6 des Anschlussmodulgehäuse 8 entsprechend orientiert bzw. ausgebildet werden. Beispielswiese kann der Einlass 6 durch einen nach unten offenen Rohrstuten gebildet werden.

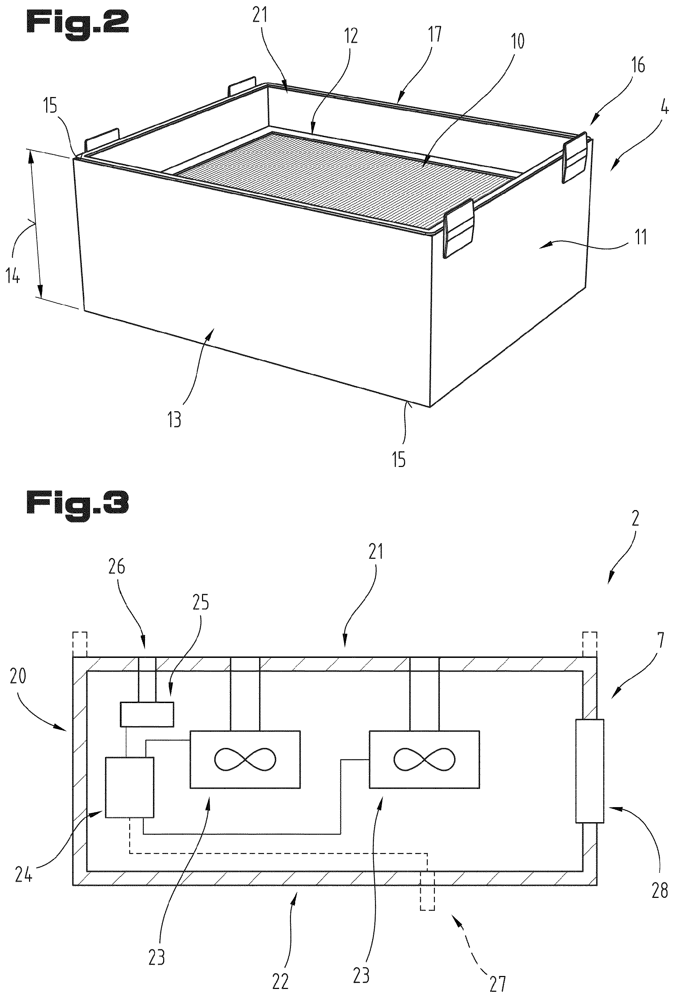

In Fig. 2 ist das Filtermodul 4 dargestellt. Die Filtermodule 4, 5 einer Vorrichtung 1 können vom Prinzip her gleich ausgebildet sein, sodass im Folgenden nur ein Filtermodul 4 beschrieben wird.

Das Filtermodul 4 weist zumindest ein Filterelement 10 auf. Es können auch mehrere Filterelemente 10 im Filtermodul 4 angeordnet sein, beispielsweise zwei unmittelbar übereinander oder mit Abstand zueinander.

Bei mehr als einem Filterelement 10 pro Filtermodul 4 können diese gleich oder unterschiedlich ausgebildet sein. Insbesondere können diese eine unterschiedliche Durchlässigkeit für Feststoffpartikel aufweisen, also eine unterschiedliche Filterklasse haben.

Wenn in der Vorrichtung 1 unterschiedliche Filtermodule 4, 5 angeordnet sind, dann können sich diese (ausschließlich) durch Filterelemente 10 unterscheiden, die unterschiedlichen Filterklassen angehören, sodass also beispielsweise ein Grob- und Feinstaubabscheidung mit der Vorrichtung 1 möglich ist. Die Filtermodule 4, 5 können auch Filterelemente 10 aus unterschiedlichen Filterwerkstoffen aufweisen. Die konstruktive Ausgestaltung der Filtermodule 4, 5 kann aber gleich sein, bzw. gegebenenfalls auch unterschiedlich, beispielsweise indem die Filtermodule 4, 5 unterschiedliche Höhen aufweisen.

Das zumindest eine Filterelement 10 ist in einem Rahmen 11 des Filtermoduls 4 gehalten und mit diesem nicht lösbar (untrennbar) verbunden. Nicht lösbar bedeutet in diesem Zusammenhang, dass das Filterelement 10 nicht ohne Zerstörung des Filterelementes 10 und/oder des Verbindungsmittels vom Rahmen 11 getrennt werden kann, wie dies bei lösbaren Verbindungen der Fall ist. Beispielsweise kann das Filterelement 10 mit dem Rahmen 11 stoffschlüssig verbunden sein, z.B. verklebt oder verschweißt sein, z.B. mittels eines thermoplastischen Kunststoffes. Andere Verbindungsmethoden sind je nach Rahmenmaterial ebenfalls einsetzbar, beispielsweise kann das Filterelement 10 auf den Rahmen 11 aufgenietet oder an diesen angenäht, etc., sein.

Es sei in diesem Zusammenhang noch einmal darauf hingewiesen, dass das Filterelement 10 im Rahmen der Erfindung nicht zwingenderweise den Rahmen 11 aufweisen muss. Das Filterelement 10 kann auch als Filterpatrone oder Filterkartusche oder als Einschubfilter, etc. ausgebildet sein, wie dies aus dem Stand der Technik bekannt ist. Derartige Filterelemente 10 werden üblicherweise in einem gemeinsamen Gehäuse aufgenommen, das nicht Teil der Filterelemente 10 ist bzw. das nicht teilweise durch die Filterelemente 10 bzw. die Filtermodule 4, 5 gebildet wird.

Das Filterelement 10 kann an einem Steg 12 anliegend oder aufliegend angeordnet sein bzw. in eine Nut dieses Steges 12 eingreifend angeordnet sein. Der Steg 12 bzw. entsprechenden Teile davon, ist/sind vorzugsweise einstückig mit dem Rahmen 11 bzw. Rahmenwänden 13 ausgebildet.

Der Rahmen 11 kann aus einer einzigen umlaufenden Rahmenwand 13 oder aus mehreren Rahmenwänden 13 gebildet sein.

Der Rahmen 11 definiert eine freie Fläche, die von dem Rahmen 11 umgeben ist. Das Filterelement 10 nimmt diese freie Fläche zur Gänze ein, sodass das zu reinigende Gas zwangsweise das Filterelement 10 durchströmen muss.

Bei anderen Ausführungsvarianten der Erfindung ohne diesen modularen Aufbau sind in der Vorrichtung 1 entsprechende Leitelemente angeordnet, die den Gasstrom zu bzw. durch die Filterelemente 10 leiten.

Das Filterelement 10 ist vorzugsweise ebenflächig, beispielsweise plattenförmig, ausgebildet. Es kann aus einen Filtergewebe oder einem Papierfilter oder einem anderen für die genannten Zwecke bekannten Filtermaterial, wie beispielsweise Aktivkohle (für Gase) bestehen und gegebenenfalls eine Stützstruktur aufweisen, falls die Eigensteifigkeit nicht ausreichen groß ist.

Der Rahmen 11 kann einen Teil des Gehäuses 9 bilden, sodass also das Filtermodul 4 bei der Ausführungsvariante der Vorrichtung nach Fig. 1 nicht in ein zusätzliches Gehäuse eingesetzt ist. Mit anderen Worten ausgedrückt ist das Gehäuse der Vorrichtung 1 nach Fig.1 aus dem Saugvorrichtungsgehäuse 7, dem Anschlussmodulgehäuse 8 und dem zumindest einen Rahmen 11 des zumindest einen Filtermoduls 4, 5 gebildet.

Der Rahmen 11 kann eine für die Funktion des Filtermoduls 4 zweckmäßige Höhe 14 aufweisen. Die Höhe 14 kann beispielsweise zwischen 10 cm und 60 cm, insbesondere zwischen 10 cm und 40 cm, betragen. Mit "zweckmäßig" ist gemeint, dass das Filtermodul 4 auch ausreichend Volumen für die Aufnahme von aus dem Gas abgetrennten Stoffen aufweisen soll. Der Rahmen 11 kann also beispielsweise in Form eines Mantels eines Quaders bzw. generell mantelförmig ausgebildet sein. Der Begriff "Rahmen 11" ist im Sinne der Erfindung also nicht zwingend so zu verstehen, dass dieser relativ flach in Art eines Bilderrahmens gebildet ist und aus Leisten zusammengesetzt ist.

Prinzipiell kann der Rahmen 11 aus einem metallischen Werkstoff bestehen. In der bevorzugten Ausführungsvariante besteht der Rahmen jedoch teilweise oder zur Gänze aus einem nichtmetallischen Werkstoff. Besonders bevorzugt wird dabei eine Faserwerkstoff eingesetzt, wie beispielsweise ein Holzfaserwerkstoff, z.B. MDF-Platten, oder auch aus Zellstoff oder Holzschliff oder Altpapier bestehende Werkstoffe, wie insbesondere Karton oder Wellpappe. Es können aber auch thermo- oder duroplastische Kunststoffe eingesetzt werden, beispielsweise in Form von Kunststoffplatten oder Stegplatten, etc.

Eine Stirnfläche 15 des Rahmens 11 kann mit zumindest einem Formschlusselement ausgebildet bzw. versehen sein, beispielsweise gestuft, nutförmig, mit einem Steg, etc., ausgeführt sein. Dabei können die beiden axialen Stirnflächen 15 des Rahmens 11 jeweils komplementäre Formschlusselemente aufweisen, sodass zwischen mehreren aufeinander gestellten Filtermodulen 4, 5 ein Formschluss ausgebildet wird.

Der Vollständigkeit halber sei angemerkt, dass die Filtermodule 4, 5 einer Vorrichtung 1 vorzugsweise die gleiche Querschnittsform und Querschnittsgröße aufweisen.

Alternativ oder zusätzlich zu der formschlüssigen Verbindung zwischen den einzelnen Modulen der Vorrichtung 1, also dem Saugmodul, dem Anschlussmodul 3 und den Filtermodulen 4, 5, können einzelne oder alle dieser Module kraftschlüssig miteinander verbunden sein. Insbesondere kann dazu gemäß einer Ausführungsvariante vorgesehen sein, dass zumindest einzelne dieser Module vorzugsweise sämtliche, mit Spann-Verschlüsse 16 miteinander verbunden sind. Die Spann-Verschlüsse 16 an sich können dem Stand der Technik hierfür entsprechend ausgebildet sein.

Die kraftschlüssige Verbindung zwischen den Modulen des Gehäuses 9 der Vorrichtung 1 kann auch anders hergestellt sein, beispielsweise durch Schrauben, Kniehebel, mittels Excenterverbinder bestehend aus einem drehbaren Exzenter in dem der Kopf eines Bolzens aufgenommen ist, wobei der Exzenter in einem ersten Modul und der Bolzen in einem zweiten, unmittelbar an das erste Modul anschließenden Modul angeordnet sind, (wie dies für die Verbindung von Möbelkorpusplatten bekannt ist), etc.

Insbesondere sind die einzelnen Module der Vorrichtung 1 dichtend miteinander verbunden, sodass im Betrieb der Vorrichtung 1 zwischen den Modulen kein Gasstrom austritt. Dazu kann zwischen den Modulen ein Dichtelement 17, insbesondere eine Elastomerdichtung, angeordnet sein, beispielsweise an jeweils einem der aneinander anliegenden Module angeformt (z.B. mittels Spritzguss oder durch Aufspritzen) sein.

Zur bessern Handhabbarkeit der Module kann auf diesen/diesem zumindest ein Handhabungselement 18, z.B. ein Griff, eine Schlaufe oder eine Griffmulde, angeordnet bzw. befestigt sein, wie dies aus Fig. 1 ersichtlich ist.

Es kann weiter vorgesehen sein, dass an der Vorrichtung 1, insbesondere dem Saugmodul 2, Räder 19 angeordnet sind.

In Fig. 3 ist eine Ausführungsvariante der Saugvorrichtung 2 gezeigt, die bevorzugt als voranstehend genanntes Saugmodul ausgeführt ist.

Die Saugvorrichtung 2 weist das Saugvorrichtungsgehäuse 7 auf, das aus einem Gehäusemantel 20, eine ersten Stirnwand 21 und einer zweiten Stirnwand 22 gebildet ist.

In der Saugvorrichtung 2 ist die "Technik" der Vorrichtung 1 angeordnet, also beispielsweise ein Saugelement 23 mit einem Antriebselement oder mehrere Saugelemente 23 mit (gegebenenfalls jeweils) einem Antriebselement, wie z.B. ein Ventilator oder eine Turbine. Das Antriebselement bzw. die Antriebselemente kann ein/können beispielsweise Elektromotor(en) sein. Das zumindest eine Antriebselement kann aber auch anders ausgebildet sein.

In der Ausführungsvariante des Saugvorrichtung 2 nach Fig. 3 sind zwei Saugelemente 23 vorgesehen. Die Saugvorrichtung 2 kann aber auch nur ein Saugelement 23 oder mehr als zwei Saugelemente 23 aufweisen, beispielsweise drei oder vier, etc.

In der Saugvorrichtung 2 sind weiter eine Steuer- und/oder Regeleinrichtung 24 und ein Drucksensor 25, insbesondere ein Unterdrucksensor, angeordnet.

Die Steuer- und/oder Regeleinrichtung 24 weist einen Regler zur Einstellung bzw. Verstellung einer Steuer- und/oder Regelgröße für die Veränderung des Volumenstroms des gasförmigen Fluids, das mit dem zumindest einen Saugelement 23 durch die Vorrichtung 1 gesaugt wird, auf. Der Regler ist insbesondere ein PI-Regler, kann aber auch ein P- oder ein I- oder ein PID-Regler sein.

Der Drucksensor 25 ist der einzige Sensor der Vorrichtung 1, mit dem der Druckverlust in der Vorrichtung 1 beim Durchströmen der Filtermodule 4, 5, etc., erfasst wird. Es wird also mit diesem einzigen Drucksensor 25 der Gesamtdruckverlust der Vorrichtung 1 bis zur Saugvorrichtung 2 erfasst. Eine Differenzdruckmessung, wie diese im Stand der Technik beschrieben ist, ist daher nicht notwendig, sodass an den einzelnen Filtermodulen 4, 5 keine Messstellen für die Druckmessung vorhanden bzw. ausgebildet sein müssen bzw. sind.

Der Drucksensor 25 an sich kann dem Stand der Technik hierfür entsprechend ausgebildet sein. Beispielsweise kann der Drucksensor 25 ein Differenzdrucksensor auf einer Platine sein, welcher eine elektronische Kalibrierung des Nullpunktes erlaubt. Zudem ist es von Vorteil, wenn der Drucksensor eine Kompensation der Temperatur erlaubt, wenn er in der Abluft eingesetzt wird, die höhere Temperaturen aufweisen kann, beispielsweise bis zu 60 °C.

An dieser Stelle sei erwähnt, dass die bevorzugte Ausführungsvariante der Vorrichtung 1 jene ist, bei der das gasförmige Fluid durch das zumindest eine Filterelemente 10 gesaugt wird, sodass also das zumindest eine Saugelement 23 in Strömungsrichtung des Fluids nach dem oder den Filterelement(en) 10 angeordnet ist. Es besteht aber die Möglichkeit, dass das zumindest eine Saugelement für das gasförmige Fluid in Strömungsrichtung des gasförmigen Fluids vor dem oder den Filterelement(en) 10 angeordnet ist. Dies ist jedoch nicht bevorzugt, da bei dieser Ausführungsvariante das zumindest eine Saugelement u.U. mit abrasiven Medien aufschlagt wird. In dieser Ausführungsvariante wird das gasförmige Fluid zwar von dem zumindest einen Saugelement noch immer angesaugt, aber in weiterer Folge durch das oder die Filterelement(e) 10 gedrückt. Nachdem mit dem Drucksensor 25 der Gesamtdruckverlust durch die das oder die Filterelement(e) 10 erfasst wird, muss in dieser Ausführungsvariante entweder der Drucksensor 25 in Strömungsrichtung des gasförmigen Fluids nach dem letzten der Filterelemente 10 angeordnet sein oder eine entsprechende Strömungsverbindung, z.B. ein Schlauch, zwischen einer Messstelle, die nach dem letzten der Filterelemente 10 angeordnet ist, zur Saugvorrichtung 2 angeordnet werden, sodass der Drucksensor 25 für die Erfassung des Gesamtdruckverlusts in der der Saugvorrichtung 2, die in dieser Ausführungsvariante in Strömungsrichtung des gasförmigen Fluids vor den Filterelementen 10 angeordnet ist, verbleiben kann.

In der bevorzugten Ausführungsvariante der Vorrichtung 1 befindet sich der Drucksensor 25 zur Messung des Gesamtdruckverlusts bis zur Saugvorrichtung 2 also zwischen dieser und dem Filterelement 10 bzw. dem Filtermodul 4 oder dem in Strömungsrichtung des gasförmigen Fluids letzten der mehreren Filterelemente 10 bzw. der mehreren Filtermodule 4, 5.

In der bevorzugten Ausführungsvariante der Vorrichtung 1 kann an dem Saugvorrichtungsgehäuse 7, insbesondere in der ersten Stirnfläche 21, an einer dem Filtermodul 4 oder den Filtermodulen 4, 5 bzw. dem oder den Filterelement(en) 10 zugewandten Oberfläche eine Messstelle, d.h. ein Messeingang 26, für den Drucksensor 25 angeordnet bzw. ausgebildet sein. Diese Messstelle steht in direkter Verbindung zu dem darüber liegenden Volumen unterhalb des (in Strömungsrichtung letzten) Filterelements 10, also insbesondere dem Volumen unterhalb des Filterelements 10 des (in Strömungsrichtung letzten) Filtermoduls 4, 5.

Als Bezugsnullpunkt für die Messung des Druckverlusts in der Vorrichtung 1 wird bevorzugt der Atmosphärendruck der Umgebungsatmosphäre der Vorrichtung 1 herangezogen werden. Da sich dieser in der Regel in einem kleinen Bereich ändert, kann der entsprechende Wert in einem elektronischen Speicherelement der Saugvorrichtung 2 hinterlegt sein.

Gemäß einer anderen Ausführungsvariante der Vorrichtung 1 kann jedoch vorgesehen sein, dass an dem Saugvorrichtungsgehäuse 7, insbesondere in der zweiten Stirnfläche 21 oder dem Gehäusemantel 20, eine Schnittstelle 27 zur Messung des Umgebungsdrucks angeordnet ist. Die Schnittstelle 27 kann mit einem Drucksensor verbunden sein, der den Umgebungsdruck misst. Dieser Drucksensor kann aber auch in/an der Saugvorrichtung 2 angeordnet sein. Dieser Drucksensor dient ausschließlich zur Erfassung des Umgebungsdrucks für die Bereitstellung des Bezugsnullpunkts für die Messung des Druckverlusts in der Vorrichtung 1 mit dem einzigen Drucksensor 25 für diese Messung dieses Gesamtdruckverlusts. Die Schnittstelle 27 kann mit der Steuer- und Regeleinrichtung 24 leitungsgebunden verbunden sein, wie dies strichliert dargestellt ist, um beispielsweise Messwerte zu übertragen.

Nach einer anderen Ausführungsvariante ist es möglich, dass der Drucksensor 25 zwei Anschlüsse aufweist und dieser damit ein Differenzdrucksensor ist. Mit dieser Ausführung des Drucksensors 25 kann über einen Anschluss der Gesamtunterdruck vor dem Saugelement 23 gemessen werden. Über den zweiten Anschluss kann der Umgebungsdruck (Messpunkt an der Schnittstelle 27) gemessen werden.

Nach einer anderen Ausführungsvariante der Vorrichtung 1 kann auch vorgesehen sein, dass diese, insbesondere die Saugvorrichtung 2, eine Schnittstelle zur drahtlosen Kommunikation mit weiteren Elementen aufweist, beispielsweise mittels WLAN. Dabei kann vorgesehen sein, dass der Messwert für den Bezugsnullpunkt über diese Schnittstelle der Vorrichtung 1 von einer externen Messstelle oder aus dem Internet, etc., zur Verfügung gestellt wird.

Diese Schnittstelle kann auch dazu verwendet werden, um Daten von der Vorrichtung 1, beispielsweise Messdaten oder Daten zu Belegung der Filterelemente 10, an eine externe Stelle zu übertragen, um beispielsweise einen Bestellvorgang für neue Filterelemente 10 anzuregen bzw. anzustoßen.

In der bevorzugten Ausführungsvariante der Vorrichtung 1 weist die Saugvorrichtung 2 zumindest eine Auslassöffnung 28 für das Abströmen des gereinigten gasförmigen Fluids auf. Insbesondere kann diese zumindest eine Auslassöffnung in dem Gehäusemantel 20 der Saugvorrichtung 2 bzw. des Saugmoduls angeordnet sein.

Mit der voranstehend beschriebenen Vorrichtung 1 kann die Saugleistung der Vorrichtung gemäß nachfolgend beschriebenen Verfahren gesteuert bzw. geregelt werden.

Das erfindungsgemäße Verfahren dient zur Bestimmung einer Steuer- und/oder Regelgröße für die Veränderung des Volumenstroms eines gasförmigen Fluids durch die Vorrichtung 1 zur Abtrennung eines Stoffes aus dem gasförmigen Fluid, wobei das Fluid mit zumindest einer ein Antriebselement aufweisenden Saugvorrichtung 2 durch zumindest eine Einlassöffnung des Einlasses 6 der Vorrichtung 1 angesaugt und in einer Strömungsrichtung durch das zumindest eine Filterelement 10 gesaugt wird, wobei das Filterelement 10 in der Strömungsrichtung vor der Saugvorrichtung 2 angeordnet ist.

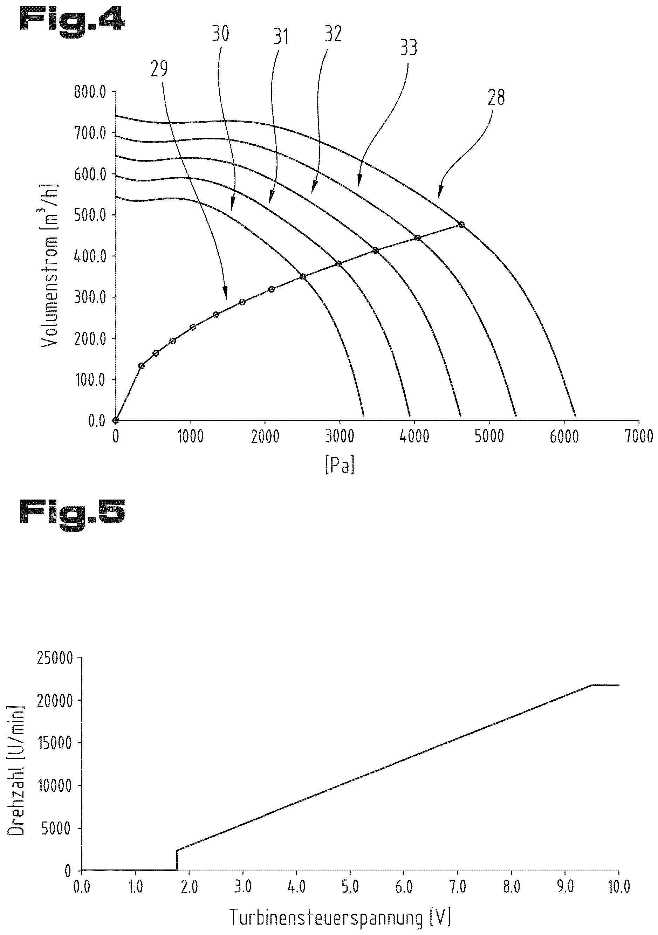

Zur Durchführung des Verfahrens wird eine Mutterkurve 28 (auch als Eichkurve bezeichenbar) der Saugvorrichtung 2 festgelegt, die die Abhängigkeit des Volumenstroms $V_M$ an gasförmigem Fluid vom Fluiddruck $p_M$ in der Saugvorrichtung wiedergibt. In Fig. 4 ist dazu ein Kennlinenfeld für ein Saugelement 23 wiedergegeben. Dabei sind auf der Abszisse der Druck in $P_a$ und auf der Ordinate der Volumenstrom in $m^3$/h angegeben.

Die Werte für die Mutterkurve 28 können aus Herstellerangaben stammen und in einem elektronischen Speicherelement der Saugvorrichtung 2 hinterlegt sein. Bevorzugt wird die Mutterkurve der Saugvorrichtung jedoch mit der Formel

$$V_M = A \times p_M^5 + B \times p_M^4 + C \times p_M^3 + D \times p_M^2 + E \times p_M^1 + F \times p_M^0,$$

berechnet. $p_M$ ist der Druck/Unterdruck, den die Saugvorrichtung 2 bei einer definierten Steuerspannung, im Beispiel nach Fig. 4 8,5 V, erzeugt. A, B, C, D, E und F sind Koeffizienten, die vorab bestimmt werden. Dazu wird die Kennlinie der jeweiligen Saugvorrichtung 2 gemessen und/oder kann diese vom Lieferanten der Saugvorrichtung 2 zur Verfügung gestellt werden. Die Funktionsgleichung kann mittels bekannter Punkte bestimmt werden. Beispielsweise können diese Koeffizienten mit der in der Versuchsanlage eingesetzten Saugvorrichtung 2 die Werte A = 8,7852E-16, B = 1,2035E-11, C = -5,9452E-08, D = 1,0688E-04, E = - 6,8520E-02, F = 738,00845 aufweisen.

Die Mutterkurve 28 in Fig. 4 wurde mit diesen Werten für die Koeffizienten erstellt. Die Druckwerte können mit der nachfolgend angegebenen Geradengleichung berechnet werden. Die Druckwerte können auch aus Messungen bezogen werden, die insbesondere mit geeichten Messgeräten vorgenommen werden, wie dies beispielsweise auch Hersteller von Saugvorrichtungen 2 durchführen.

Gemäß dieser Ausführungsvariante wird ein Polynom 5. Grades verwendet, da dabei der quadratische Fehler (Abweichung zw. Messung und Polynom) am kleinsten ist. Es kann aber auch ein Polynom 2., 3., 4. bzw. 6. Ordnung eingesetzt werden, bzw. können auch andere Polynome herangezogen werden, wie beispielsweise ein Newton-Polynom oder ein Lagrange-Polynom. Generell kann eine Polynominterpolation zur Bestimmung der Mutterkurve herangezogen werden.

Mit der Mutterkurve wird eine Kurvenfunktion bzw. eine Gleichung bereitgestellt, auf der die tatsächlichen Messwerte liegen oder zu der die tatsächlichen Messwerte möglichst nahe liegen. Die tatsächlichen Messwerte werden für eine definierte Steuerspannung, beispielsweise die genannte Steuerspannung von 8,5 V bzw. jene Steuerspannung bis zu der die Saugvorrichtung 2 die Drehzahl konstant halten kann, gemessen, insbesondere mit geeichten Messgeräten. Diese Messwerte werden der Berechnung der Mutterkurve bzw. der Polynominterpolation zu Grunde gelegt. Als Messwerte werden jeweils Datenpaare ermittelt, nämlich der zu einem definierten Druckverlust der Saugvorrichtung 2 zugehörige Volumenstrom (entsprechend der Darstellung in Fig. 4). Es können zwei, drei, vier, fünf, sechs oder mehr Messwertpaare der Berechnung der Mutterkurve zu Grunde gelegt werden. Beispielsweise können Messwerte in 50-er Schritten des Volumenstroms generiert werden.

Weiter wird mit dem Drucksensor 25 der Ist-Wert $p_I$ des Gesamtdruckverlusts in der Vorrichtung 1 bis zur Saugvorrichtung 2 bzw. dem Saugmodul, der den Gesamtwiderstand (Strömungswiderstand) der Vorrichtung 1 wiedergibt, gemessen. Der Gesamtdruckverlust wird als Druck an sich gemessen. Dieser entspricht aber dem Gesamtdruckverlust, da sich je nach Gesamtdruckverlust der Wert für den gemessenen Druck ändert.

Für die Durchführung des Verfahrens wird weiter die Steuerspannung zum Zeitpunkt der Messung des Gesamtdruckverlustes der Vorrichtung mit dem Drucksensor 25 bestimmt, die vom voranstehend genannten Regler der Saugvorrichtung 2, also bevorzugt dem PI-Regler für die Drehzahlregelung des Antriebselements für das Saugelement 23, ausgegeben wird.

Die Steuerspannung ist proportional zur Drehzahl des Antriebselementes für das Saugelement 23 der Saugvorrichtung 2. In Fig. 5 ist die Beziehung grafisch dargestellt. Auf der Abszisse ist dabei die Steuerspannung in V und auf der Ordinate ist die Drehzahl in U/min aufgetragen. Wie zu ersehen ist, handelt sich dabei im Wesentlichen um eine Geradengleichung $n_I = k \times$ Steuerspannung $- z$, wobei k die Steigung der Kennlinie und z eine Verschiebungskonstante bedeuten. Im konkreten Beispiel der Fig. 5 sind k = 2468,2 und z = 2372. Diese Werte bzw. die Funktion kann für die jeweilig verwendete Saugvorrichtung 2 berechnet bzw. bestimmt werden, indem zum Beispiel die Drehzahl bei verschiedenen Steuerspannungen gemessen wird und für diese somit bekannten Werte/Punkte die zugrundeliegende Kurve ermittelt wird.

Anhand dieser Geradengleichung kann von der Steuerspannung auf die aktuelle Ist-Drehzahl des Antriebselements für das Saugelement 23 (zum Zeitpunkt der Druckmessung) rückgeschlossen werden.

Vorzugsweise wird diese Geradengleichung ausschließlich in jenem Bereich der Saugvorrichtung 2 angewandt wird, deren untere Grenze $n_{uG}$ durch den Wert der Steuerspannung definiert ist, bei der die Saugvorrichtung anspricht, d.h. das Antriebselement das Saugelement 23 zu drehen beginnt, und deren obere Grenze $n_{oG}$ durch den Wert der Steuerspannung definiert ist, die der maximalen Drehzahl der Antriebsvorrichtung entspricht, d.h. ab der eine weitere Erhöhung der Steuerspannung keine weitere Erhöhung der Drehzahl bewirkt. Für das konkrete Beispiel beginnt liegt die Untergrenze $n_{uG}$ bei ca. 1,8 V und die Obergrenze $n_{oG}$ bei ca. 9,5 V. Diese Werte sind abhängig vom eingesetzten Saugelement 23 bzw. der in der Vorrichtung 1 eingesetzten Turbine. Die Geradengleichung an sich hat aber allgemeinen Charakter.

Aus dem Ist-Wert des Gesamtdruckverlustes $p_I$ der Vorrichtung 1 wird der zugehörige Druckverlust der Mutterkurve $p_M$ bei der vom Regler der Saugvorrichtung 2 ausgegebenen Steuerspannung zum Zeitpunkt der Messung des Gesamtdruckverlustes der Vorrichtung 1 mit der Formel

$$p_M = (n_M/n_I)^2 \times p_I$$

berechnet, wobei $n_M$ die Drehzahl des Antriebselements bei einer der Mutterkurve entsprechenden Steuerspannung bedeutet, insbesondere berechnet mit der voranstehend wiedergegebenen Geradengleichung und/oder als Zahlenwert in einem elektronischen Speicherelement der Vorrichtung 1 zur Abtrennung eines Stoffes aus einem gasförmigen Fluid hinterlegt.

Aus diesem Wert des Volumenstroms der Mutterkurve bei der Steuerspannung der Mutterkurve wird mit der Formel $V_I = (n_I/n_M) \times V_M$ der Ist-Wert des Volumenstroms $V_I$ bei der vom Regler ausgegebenen Steuerspannung berechnet.

In weiterer Folge wird der Ist-Wertes des Volumenstroms $V_I$ mit einem Soll-Wert des Volumenstroms bei dieser Steuerspannung verglichen und gegebenenfalls eine Änderung der Steuerspannung zur Änderung der Drehzahl des Antriebselements des Saugelements 23 und/oder zur Änderung des Gesamtdruckverlusts der Vorrichtung 1 vorgenommen, um den Ist-Wert an den Soll-Wert des Volumenstroms anzugleichen.

Es sei darauf hingewiesen, dass "der Soll-Wert des Volumenstroms bei dieser Steuerspannung" nicht der Soll-Wert für den Volumenstrom ist, der vom Bediener am Gerät eingegeben bzw. vordefiniert wird.

In Fig. 4 ist beispielhaft die Änderung des Betriebspunktes entlang einer Betriebspunktkurve 29 dargestellt. Die Kennlinien unterhalb der Mutterkurve 28 sind die entsprechenden Kennlinien für eine Steuerspannung von 6,5 V, berechnet aus der Mutterkurve bei 8,5 V nach der Formel

$$V_M = A \times p_M{}^5 + B \times p_M{}^4 + C \times p_M{}^3 + D \times p_M{}^2 + E \times p_M{}^1 + F \times p_M{}^0,$$

(Kennlinie 30), für eine Steuerspannung von 7,0 V, berechnet aus der Mutterkurve bei 8,5 V (Kennlinie 32), für eine Steuerspannung von 7,5 V, berechnet aus der Mutterkurve bei 8,5 V (Kennlinie 33) und für eine Steuerspannung von 8,0 V, berechnet aus der Mutterkurve bei 8,5 V (Kennlinie 33).

Gemäß einer Ausführungsvariante des Verfahrens kann vorgesehen sein, dass der Ist-Wert des Volumenstroms bei einer erfassten Steuerspannung, die der Regler ausgibt, mit der Formel

$$V_I = V_M/\sqrt{(P_M/P_I)}$$

in einem Schritt berechnet wird. $\sqrt{}$ bedeutet darin die Quadratwurzel.

Bevorzugt wird nach einer Ausführungsvariante des Verfahrens die Mutterkurve bei der maximalen Steuerspannung definiert, bei der die Drehzahl der Antriebseinrichtung in Abhängigkeit vom Gesamtdruckverlustes $p_I$ der Vorrichtung 1 konstant gehalten werden kann. In der beschriebenen Ausführungsvariante sind dies 8,5 V, wobei dieser Wert von der eingesetzten Saugvorrichtung 2 abhängig ist. Mit "konstant gehalten werden kann" ist dabei gemeint, dass die Drehzahl der Antriebseinrichtung entlang der Kurve, also beispielswiese der Mutterkurve 28, konstant gehalten werden kann, also die Regelung bzw. Steuerung der Saugvorrichtung 2 in der Lage ist, bei auftretenden Änderungen im Volumenstrom oder im Druckverlust die Drehzahl konstant zu halten.

Für Steuerspannung die größer sind als jene der Mutterkurve, d.h. für eine Drehzahl ab der Drehzahl, bis zu der diese konstant gehalten werden kann, wird vorzugsweise eine zweite Mutterkurve festgelegt.

Weiter wird vorzugsweise gemäß einer Ausführungsvariante des Verfahrens für einen Bereich mit einer unteren Grenze der Steuerspannung, ab der der Volumenstrom an gasförmigen Fluid durch die Vorrichtung 1 durch eine Drehzahländerung um maximal 1 % erhöht werden kann, eine dritte Mutterkurve festgelegt wird, die entsprechend der Formel

$$V_M = A \times p_M^5 + B \times p_M^4 + C \times p_M^3 + D \times p_M^2 + E \times p_M^1 + F \times p_M^0,$$

berechnet wird, wobei die Steuerspannung größer ist als die Steuerspannung der zweiten Mutterkurve, und die an die Steuerspannung der zweiten Mutterkurve anschließende nächste halbe oder ganze Zahl ist. Mit anderen Worten ausgedrückt wird beispielsweise bei einer Steuerspannung von 8,3 V eine Mutterkurve für eine Steuerspannung von 8,5 V oder bei einer Steuerspannung von 8,7 V eine Mutterkurve für eine Steuerspannung von 9 V als dritte Mutterkurve verwendet. Dies ist darin begründet, dass an der oberen Leistungsgrenze der Saugvorrichtung 2 die maximale Leistung des jeweiligen Antriebselements des Saugelements 23 anliegen soll. Diese ist beispielsweise bei einer Steuerspannung von 9,5 V für das Beispiels nach Fig. 5 gegeben, ab der eine Drehzahländerung zu keiner weiteren Leistungssteuerung führt.

Falls eine Saugvorrichtung 2 eingesetzt wird, die über den gesamten Bereich der Steuerspannung, also z.B. von 0 V bis 10 V, die Drehzahl konstant halten kann, ist es auch möglich, dass nur eine Mutterkurve, also beispielsweise die Mutterkurve 28, in der Vorrichtung 1 hinterlegt wird, wenngleich auch in diesem Fall die Hinterlegung mehrerer Mutterkurven (wie beschrieben) von Vorteil ist.

Die Verfahrensschritte können in der Steuer- und/oder Regeleinrichtung 24 der Saugvorrichtung 2 vorgenommen werden. Dazu kann diese ein elektronisches Speicherelement aufweisen, in dem ein entsprechendes Programm zur Abarbeitung der Schritte des Verfahrens und die Kennlinien hinterlegt/gespeichert sind.

Es ist aber auch möglich, dass ein Teil dieser Berechnungen an eine externe Recheneinheit ausgelagert wird. Die Kommunikation zwischen dieser und der Steuer- und/oder Regeleinrichtung 24 kann leitungsgebunden oder drahtlos erfolgen. Dies kann von Vorteil sein, wenn an einem Arbeitsplatz die Luft mit mehreren Vorrichtungen 1 gereinigt wird, und diese Vorrichtungen 1 aufeinander abgestimmt werden sollen. Diese Abstimmung kann auch direkt erfolgen, wenn die mehreren Vorrichtungen leitungsgebunden oder drahtlos miteinander kommunizieren können.

Wie in Fig. 3 angedeutet, können Komponenten der Saugvorrichtung 2 zum Austausch bzw. zur Übertragung von Messwerten oder Daten leitungsgebunden oder drahtlos miteinander verbunden sein.

Die Ausführungsbeispiele zeigen bzw. beschreiben mögliche Ausführungsvarianten der Vorrichtung 1 zur Abtrennung eines (Fest)Stoffes aus einem gasförmigen Fluid bzw. eines Verfahrens zum Betreiben dieser Vorrichtung 1 bzw. zur Bestimmung einer Steuer- und/oder Regelgröße für die Veränderung des Volumenstroms eines gasförmigen Fluids durch eine Vorrichtung 1 zur Abtrennung eines Stoffes aus einem gasförmigen Fluid, wobei an dieser Stelle bemerkt sei, dass auch Kombinationen der einzelnen Ausführungsvarianten untereinander möglich sind.

Der Ordnung halber sei abschließend darauf hingewiesen, dass zum besseren Verständnis des Aufbaus der Vorrichtung 1 diese bzw. deren Bestandteile nicht zwingenderweise maßstäblich dargestellt sind.

Bezugszeichenaufstellung

| | |
|---|---|
| 1 | Vorrichtung |
| 2 | Saugvorrichtung |
| 3 | Anschlussmodul |
| 4 | Filtermodul |
| 5 | Filtermodul |

| | |
|---|---|
| 6 | Einlass |
| 7 | Saugvorrichtungsgehäuse |
| 8 | Anschlussmodulgehäuse |
| 9 | Gehäuse |
| 10 | Filterelement |

| | |
|---|---|
| 11 | Rahmen |

12      Steg
13      Rahmenwand
14      Höhe
15      Stirnfläche

16      Spann-Verschluss
17      Dichtelement
18      Handhabungselement
19      Rad
20      Gehäusemantel

21      Stirnwand
22      Stirnwand
23      Saugelement
24      Regeleinrichtung
25      Drucksensor

26      Messeingang
27      Schnittstelle
28      Mutterkurve
29      Betriebspunktkurve
30      Kennlinie 6,5 V

31      Kennlinie 7,0 V
32      Kennlinie 7,5 V
33      Kennlinie 8,0 V

**Patentansprüche**

1.  Verfahren zur Bestimmung einer Steuer- und/oder Regelgröße für die Veränderung des Volumenstroms eines gasförmigen Fluids durch eine Vorrichtung (1) zur Abtrennung eines Stoffes aus einem gasförmigen Fluid, wobei das Fluid mit zumindest einer ein Antriebselement aufweisenden Saugvorrichtung (2) durch zumindest eine Einlassöffnung der Vorrichtung (1) angesaugt und in einer Strömungsrichtung durch zumindest ein Filterelement (10) gesaugt wird, wobei das Filterelement (10) in der Strömungsrichtung vor der Saugvorrichtung (2) angeordnet wird, umfassend die Schritte:

    a.) Festlegung einer Mutterkurve (28) der Saugvorrichtung (2), die die Abhängigkeit des Volumenstroms $V_M$ an gasförmigem Fluid vom Fluiddruck $p_M$ in der Saugvorrichtung (2) wiedergibt;
    b.) Messung des Ist-Wertes des Gesamtdruckverlustes $p_I$ der Vorrichtung (1) bis zur Saugvorrichtung (2) mit einem Drucksensor (25);
    c.) Erfassung einer von einem Regler der Saugvorrichtung (2) ausgegebenen Steuerspannung zum Zeitpunkt der Messung des Gesamtdruckverlustes der Vorrichtung (1);
    d.) Berechnung einer Ist-Drehzahl $n_I$ des Antriebselements der Saugvorrichtung (2) mit der Formel

    $$n_I = k \times \text{Steuerspannung} - z,$$

    wobei k die Steigung der Kennlinie und z eine Verschiebungskonstante bedeuten,
    e.) Berechnung des zum gemessenen Ist-Wert des Gesamtdruckverlustes $p_I$ der Vorrichtung (1) zugehörigen Druckverlustes der Mutterkurve $p_M$ bei der vom Regler der Saugvorrichtung (2) ausgegebenen Steuerspannung zum Zeitpunkt der Messung des Gesamtdruckverlustes der Vorrichtung (1) mit der Formel

    $$p_M = (n_M/n_I)^2 \times p_I$$

    wobei $n_M$ die Drehzahl des Antriebselements bei einer der Mutterkurve (28) entsprechenden Steuerspannung bedeutet, berechnet mit der unter Punkt d. wiedergegebenen Formel und/oder als Zahlenwert in einem elektronischen Speicherelement der Vorrichtung (1) zur Abtrennung eines Stoffes aus einem gasförmigen Fluid hinterlegt;

f.) Berechnung des Volumenstroms Vm der Mutterkurve (28) beim Druckverlust der Mutterkurve (28) $p_M$;

g.) Berechnung des Ist-Wertes des Volumenstroms $V_I$ bei der vom Regler ausgegebenen Steuerspannung mit der Formel;

$$V_I = (n_I/n_M) \times V_M$$

h.) Vergleich des Ist-Wertes des Volumenstroms $V_I$ mit einem Soll-Wert des Volumenstroms bei der vom Regler ausgegebenen Steuerspannung;

i.) Gegebenenfalls Änderung der Steuerspannung zur Änderung der Drehzahl der Saugvorrichtung (2) der Vorrichtung (1) um den Ist-Wert an den Soll-Wert des Volumenstroms anzugleichen.

2. Verfahren nach Anspruche 1, **dadurch gekennzeichnet, dass** die Mutterkurve (28) der Saugvorrichtung (2) mit der Formel

$$V_M = A \times p_M^5 + B \times p_M^4 + C \times p_M^3 + D \times p_M^2 + E \times p_M^1 + F \times p_M^0,$$

Berechnet wird, wobei A, B, C, D, E und F Koeffizienten sind und $p_M$ den Druck, den die Saugvorrichtung (2) bei einer definierten Steuerspannung erzeugt, bedeuten.

3. Verfahren nach Anspruch 1 oder 2, **dadurch gekennzeichnet, dass** die Schritte e. und f. in einem Schritt mit der Formel

$$V_I = V_M/\sqrt{(P_M/P_I)}$$

kombiniert werden.

4. Verfahren nach einem der Ansprüche 1 bis 3, **dadurch gekennzeichnet, dass** die Mutterkurve (28) bei der maximalen Steuerspannung definiert wird, bis zu der die Drehzahl des Antriebselements in Abhängigkeit vom Gesamtdruckverlustes $p_I$ der Vorrichtung (1) konstant gehalten werden kann.

5. Verfahren nach einem der Ansprüche 1 bis 4, **dadurch gekennzeichnet, dass** die Formel

$$n_I = k \times Steuerspannung - z$$

ausschließlich in jenem Bereich der Saugeinrichtung (2) angewandt wird, deren untere Grenze $n_{uG}$ durch den Wert der Steuerspannung definiert ist, bei der die Saugvorrichtung anspricht, und deren obere Grenze $n_{oG}$ durch den Wert der Steuerspannung definiert ist, die der maximalen Drehzahl des Antriebselements entspricht.

6. Verfahren nach einem der Ansprüche Anspruch 5, **dadurch gekennzeichnet, dass** für eine Drehzahl ab der Drehzahl, bis zu der diese konstant gehalten werden kann, eine zweite Mutterkurve festgelegt wird.

7. Verfahren nach Anspruch 6, **dadurch gekennzeichnet, dass** für einen Bereich mit einer unteren Grenze der Steuerspannung, ab der der Volumenstrom an gasförmigen Fluid durch die Vorrichtung (1) durch eine Drehzahländerung um maximal 1 % erhöht werden kann, eine dritte Mutterkurve festgelegt wird, die entsprechend der Formel in Anspruch 2 berechnet wird, wobei die Steuerspannung größer ist als die Steuerspannung der zweiten Mutterkurve, und die an die Steuerspannung der zweiten Mutterkurve anschließende nächste halbzahlige oder ganzzahlig Steuerspannung ist.

8. Vorrichtung (1) zur Abtrennung eines Stoffes aus einem gasförmigen Fluid, umfassend ein Filterelement (10) oder in einer vorgesehenen Strömungsrichtung des gasförmigen Fluids durch die Vorrichtung (1) mehrere hintereinander angeordnete Filterelemente (10), und zumindest eine Saugvorrichtung (2), die zumindest ein Saugelement (23) mit zumindest einem Antriebselement und zumindest einen Regler zur Einstellung einer Steuer- und/oder Regelgröße für die Veränderung des Volumenstroms des gasförmigen Fluids durch die Vorrichtung (1) aufweist, sowie mit einem Drucksensor (25) zur Messung eines Druckverlusts in der Vorrichtung (1) und mit einer Datenverarbeitungseinrichtung, die ein elektronisches Speichermodul aufweist, **dadurch gekennzeichnet, dass** ausschließlich ein Drucksensor (25) zur Messung eines Druckverlusts in der Vorrichtung (1) vorgesehen ist, der zwischen der Saugvorrichtung (2) und dem Filterelement (10) oder dem der Saugvorrichtung (2) am nächsten angeordneten Filterelement (10) der mehreren Filterelemente (10) angeordnet ist, und dass in dem elektronischen Speichermodul der Datenverarbeitungseinrichtung ein Programm zur Berechnung des Ist-Wertes des Volumenstroms $V_I$ bei der vom Regler ausgegebenen Steuerspannung zur Durchführung des Verfahrens nach einem der Ansprüche 1 bis 7 hinterlegt ist.

9.  Vorrichtung (1) nach einem der Ansprüche 8, **dadurch gekennzeichnet, dass** das Filterelement (10) oder jedes der mehreren Filterelemente (10) einen Rahmen (11) aufweist, der einen Teil eines Gehäuses (9) der Vorrichtung (1) bildet.

10. Vorrichtung (1) nach Anspruch 9, **dadurch gekennzeichnet, dass** jedes der Filterelemente (10) ein Filtermodul (4, 5) bildet.

11. Vorrichtung (1) nach einem der Ansprüche 8 bis 10, **dadurch gekennzeichnet, dass** die Saugvorrichtung (2) ein Saugmodul bildet.

12. Vorrichtung (1) nach Anspruch 11, **dadurch gekennzeichnet, dass** an dem Saugmodul an einer dem Filtermodul (4) oder den Filtermodulen (4, 5) zugewandten Oberfläche ein Messeingang (26) für den Drucksensor (25) angeordnet ist.

13. Vorrichtung (1) nach Anspruch 12, **dadurch gekennzeichnet, dass** der Drucksensor (25) ein Unterdrucksensor oder ein Differenzdrucksensor ist.

14. Vorrichtung (1) nach einem der Ansprüche 11 bis 13, **dadurch gekennzeichnet, dass** an dem Saugmodul an einer Seitenfläche oder einer Unterseite eine Schnittstelle (27) zur Messung des Umgebungsdrucks angeordnet ist.

**Claims**

1.  A method for determining a control and/or regulating variable for changing the volume flow of a gaseous fluid through a device (1) for separating a substance from a gaseous fluid, wherein the fluid is sucked in through at least one inlet opening of the device (1) by at least one suction device (2) having a drive element and is sucked through at least one filter element (10) in a flow direction, wherein the filter element (10) is arranged upstream of the suction device (2) in the flow direction, comprising the steps of:

    a.) determining a master curve (28) of the suction device (2), which represents the dependence of the volume flow $V_M$ of gaseous fluid on the fluid pressure $p_M$ in the suction device (2);
    b.) measuring the actual value of the total pressure loss $p_I$ of the device (1) up to the suction device (2) with a pressure sensor (25);
    c.) detecting a control voltage output by a controller of the suction device (2) at the time of measurement of the total pressure loss of the device (1);
    d.) calculating an actual rotational speed $n_I$ of the drive element of the suction device (2) using the formula

    $$n_I = k \times \text{control voltage} - z,$$

    wherein k is the slope of the characteristic curve and z is a displacement constant,
    e.) calculating the pressure loss of the master curve $p_M$ associated with the measured actual value of the total pressure loss $p_I$ of the device (1) at the control voltage output by the controller of the suction device (2) at the time of measurement of the total pressure loss of the device (1) using the formula

    $$p_M = (n_M/n_I)^2 \times p_I$$

    wherein $n_M$ is the rotational speed of the drive element at a control voltage corresponding to the master curve (28), calculated using the formula given under point d. and/or stored as a numerical value in an electronic memory element of the device (1) for separating a substance from a gaseous fluid;
    f.) calculating the volume flow Vm of the master curve (28) at the pressure loss of the master curve (28) $p_M$;
    g.) calculating the actual value of the volumetric flow $V_I$ at the control voltage output by the controller using the

formula

$$V_I = (n_I/n_M) \times V_M$$

h.) comparing the actual value of the volumetric flow $V_I$ with a target value of the volumetric flow at the control voltage output by the controller;

i.) optionally changing the control voltage to change the rotational speed of the suction device (2) of the device (1) in order to adjust the actual value to the target value of the volume flow.

2. The method according to claim 1, **characterized in that** the master curve (28) of the suction device (2) is calculated with the formula

$$V_M = A \times p_M{}^5 + B \times p_M{}^4 + C \times p_M{}^3 + D \times p_M{}^2 + E \times p_M{}^1 + F \times p_M{}^0,$$

wherein A, B, C, D, E and F are coefficients and $p_M$ is the pressure which the suction device (2) generates at a defined control voltage.

3. The method according to claim 1 or 2, **characterized in that** steps e. and f. are combined in one step with the formula

$$V_I = V_M/\sqrt{(P_M/P_I)}.$$

4. The method according to one of claims 1 to 3, **characterized in that** the master curve (28) is defined at the maximum control voltage up to which the speed of the drive element can be kept constant as a function of the total pressure loss $p_I$ of the device (1).

5. The method according to one of claims 1 to 4, **characterized in that** the formula

$$n_I = k \times control\ voltage - z$$

is applied exclusively **in that** range of the suction device (2) the lower limit $n_{uG}$ of which is defined by the value of the control voltage at which the suction device responds, and the upper limit $n_{oG}$ of which is defined by the value of the control voltage corresponding to the maximum rotational speed of the drive element.

6. The method according to Claim 5, **characterized in that** a second master curve is defined for a rotational speed from the rotational speed up to which it can be kept constant.

7. The method according to claim 6, **characterized in that** for a range with a lower limit of the control voltage, from which the volume flow of gaseous fluid through the device (1) can be increased by a maximum of 1% by a change in the rotational speed, a third master curve is defined, which is calculated according to the formula in claim 2, wherein the control voltage is greater than the control voltage of the second master curve, and the next half-integer or integer control voltage following the control voltage of the second master curve is the control voltage.

8. A device (1) for separating a substance from a gaseous fluid, comprising a filter element (10) or, in an intended direction of flow of the gaseous fluid through the device (1), a plurality of filter elements (10) arranged one behind the other, and at least one suction device (2), which has at least one suction element (23) with at least one drive element and at least one controller for setting a control and/or regulating variable for changing the volume flow of the gaseous fluid through the device (1), as well as with a pressure sensor (25) for measuring a pressure loss in the device (1) and with a data processing device, which has an electronic memory module, **characterized in that** only one pressure sensor (25) is provided for measuring a pressure loss in the device (1), which is arranged between the suction device (2) and the filter element (10) or the filter element (10) of the plurality of filter elements (10) arranged closest to the suction device (2), and that a program for calculating the actual value of the volume flow $V_I$ at the control voltage output by the controller for carrying out the method according to one of claims 1 to 7 is stored in the electronic memory module of the data processing device.

9. The device (1) according to one of claims 8, **characterized in that** the filter element (10) or each of the plurality of filter elements (10) comprises a frame (11) forming part of a housing (9) of the device (1).

10. The device (1) according to claim 9, **characterized in that** each of the filter elements (10) forms a filter module (4, 5).

11. The device (1) according to one of claims 8 to 10, **characterized in that** the suction device (2) forms a suction module.

12. The device (1) according to claim 11, **characterized in that** a measuring input (26) for the pressure sensor (25) is arranged on the suction module on a surface facing the filter module (4) or the filter modules (4, 5).

13. The device (1) according to claim 12, **characterized in that** the pressure sensor (25) is a negative pressure sensor or a differential pressure sensor.

14. The device (1) according to one of claims 11 to 13, **characterized in that** an interface (27) for measuring the ambient pressure is arranged on the suction module on a side surface or an underside.


**Revendications**

1. Procédé pour déterminer une grandeur de commande et/ou de régulation pour la modification du débit volumique d'un fluide gazeux à travers un dispositif (1) pour séparer une substance d'un fluide gazeux, le fluide étant aspiré par au moins un dispositif d'aspiration (2) comportant un élément d'entraînement à travers au moins une ouverture d'admission du dispositif (1) et étant aspiré dans une direction d'écoulement à travers au moins un élément filtrant (10), l'élément filtrant (10) étant agencé en amont du dispositif d'aspiration (2) dans la direction d'écoulement, comprenant les étapes suivantes :

    a. ) Détermination d'une courbe mère (28) du dispositif d'aspiration (2) qui reproduit la dépendance du débit volumique $V_M$ de fluide gazeux par rapport à la pression de fluide $p_M$ dans le dispositif d'aspiration (2) ;
    b. ) Mesure de la valeur réelle de la perte de pression totale $p_I$ du dispositif (1) jusqu'au dispositif d'aspiration (2) avec un capteur de pression (25) ;
    c. ) Enregistrement d'une tension de commande émise par un régulateur du dispositif d'aspiration (2) au moment de la mesure de la perte de pression totale du dispositif (1) ;
    d. ) Calcul d'une vitesse de rotation réelle $n_I$ de l'élément d'entraînement du dispositif d'aspiration (2) à l'aide de la formule

$$n_I = k \times \text{tension de commande} - z,$$

k représentant la pente de la courbe caractéristique et z une constante de déplacement,
    e. ) Calcul de la perte de pression de la courbe mère $p_M$ correspondant à la valeur réelle mesurée de la perte de pression totale $p_I$ du dispositif (1) pour la tension de commande émise par le régulateur du dispositif d'aspiration (2) au moment de la mesure de la perte de pression totale du dispositif (1) à l'aide de la formule

$$p_M = (n_M/n_I)^2 \times p_I$$

où $n_M$ représente la vitesse de rotation de l'élément d'entraînement pour une tension de commande correspondant à la courbe mère (28), calculée à l'aide de la formule indiquée au point d. et/ou enregistrée sous forme de valeur numérique dans un élément de mémoire électronique du dispositif (1) pour la séparation d'une substance d'un fluide gazeux ;
    f. ) Calcul du débit volumique Vm de la courbe mère (28) lors de la perte de pression de la courbe mère (28) $p_M$ ;
    g. ) Calcul de la valeur réelle du débit volumique $V_I$ à la tension de commande émise par le régulateur à l'aide de la formule

$$V_I = (n_I/n_M) \times V_M$$

    h. ) Comparaison de la valeur réelle du débit volumique $V_I$ avec une valeur cible du débit volumique à la tension de commande émise par le régulateur ;
    i. ) Le cas échéant, modification de la tension de commande pour modifier la vitesse de rotation du dispositif d'aspiration (2) du dispositif (1) afin de faire concorder la valeur réelle avec la valeur cible du débit volumique.

**2.** Procédé selon la revendication 1, **caractérisé en ce que** la courbe mère (28) du dispositif d'aspiration (2) est calculée à l'aide de la formule

$$V_M = A \times p_M{}^5 + B \times p_M{}^4 + C \times p_M{}^3 + D \times p_M{}^2 + E \times p_M{}^1 + F \times p_M{}^0,$$

A, B, C, D, E et F étant des coefficients et $P_M$ étant la pression générée par le dispositif d'aspiration (2) pour une tension de commande définie.

**3.** Procédé selon la revendication 1 ou 2, **caractérisé en ce que** les étapes e. et f. sont combinées en une seule étape à l'aide de la formule

$$V_I = V_M / \sqrt{(p_M / p_I)}.$$

**4.** Procédé selon l'une des revendications 1 à 3, **caractérisé en ce que** la courbe mère (28) est définie à la tension de commande maximale jusqu'à laquelle la vitesse de rotation de l'élément d'entraînement peut être maintenue constante en fonction de la perte de pression totale $p_I$ du dispositif (1).

**5.** Procédé selon l'une des revendications 1 à 4, **caractérisé en ce que** la formule

$$n_I = k \times \text{tension de commande} - z$$

est appliquée exclusivement dans la zone du dispositif d'aspiration (2) dont la limite inférieure $n_{UG}$ est définie par la valeur de la tension de commande à laquelle le dispositif d'aspiration réagit et dont la limite supérieure $n_{0G}$ est définie par la valeur de la tension de commande qui correspond à la vitesse de rotation maximale de l'élément d'entraînement.

**6.** Procédé selon l'une des revendications de la revendication 5, **caractérisé en ce qu'**une deuxième courbe mère est définie pour une vitesse de rotation à partir de la vitesse de rotation jusqu'à laquelle celle-ci peut être maintenue constante.

**7.** Procédé selon la revendication 6, **caractérisé en ce qu'**une troisième courbe mère est déterminée pour une plage avec une limite inférieure de la tension de commande à partir de laquelle le débit volumique de fluide gazeux à travers le dispositif (1) peut être augmenté d'un maximum de 1 % par une modification de la vitesse de rotation, laquelle courbe mère est calculée selon la formule de la revendication 2, la tension de commande étant supérieure à la tension de commande de la deuxième courbe mère et à la tension de commande entière ou semi-entière suivante qui suit la tension de commande de la deuxième courbe mère.

**8.** Dispositif (1) pour séparer une substance d'un fluide gazeux, comprenant un élément filtrant (10) ou, dans une direction d'écoulement prévue du fluide gazeux à travers le dispositif (1), plusieurs éléments filtrants (10) agencés les uns derrière les autres, et au moins un dispositif d'aspiration (2) qui présente au moins un élément d'aspiration (23) avec au moins un élément d'entraînement et au moins un régulateur pour le réglage d'une grandeur de commande et/ou de régulation pour la modification du débit volumique du fluide gazeux à travers le dispositif (1), et avec un capteur de pression (25) pour la mesure d'une perte de pression dans le dispositif (1) et avec un dispositif de traitement de données qui présente un module de mémoire électronique, **caractérisé en ce qu'**un seul capteur de pression (25) est prévu pour mesurer une perte de pression dans le dispositif (1), lequel est agencé entre le dispositif d'aspiration (2) et l'élément filtrant (10) ou l'élément filtrant (10) le plus proche du dispositif d'aspiration (2) parmi les différents éléments filtrants (10), et **en ce que**, dans le module de mémoire électronique du dispositif de traitement des données, un programme de calcul de la valeur réelle du débit volumique $V_I$ est enregistré, en fonction de la tension de commande émise par le régulateur, pour la mise en œuvre du procédé selon l'une des revendications 1 à 7.

**9.** Dispositif (1) selon l'une des revendications 8, **caractérisé en ce que** l'élément filtrant (10) ou chacun des multiples éléments filtrants (10) présente un cadre (11) qui forme une partie d'un boîtier (9) du dispositif (1).

**10.** Dispositif (1) selon la revendication 9, **caractérisé en ce que** chacun des éléments filtrants (10) forme un module de filtre (4, 5).

**11.** Dispositif (1) selon l'une des revendications 8 à 10, **caractérisé en ce que** le dispositif d'aspiration (2) forme un module d'aspiration.

12. Dispositif (1) selon la revendication 11, **caractérisé en ce qu'**une entrée de mesure (26) pour le capteur de pression (25) est agencée sur le module d'aspiration sur une surface tournée vers le module de filtre (4) ou les modules de filtre (4, 5).

13. Dispositif (1) selon la revendication 12, **caractérisé en ce que** le capteur de pression (25) est un capteur de dépression ou un capteur de pression différentielle.

14. Dispositif (1) selon l'une des revendications 11 à 13, **caractérisé en ce qu'**une interface (27) pour mesurer la pression ambiante est agencée sur une surface latérale ou une surface inférieure du module d'aspiration.

# Fig.1

# Fig.2

# Fig.3

**Fig.4**

**Fig.5**

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- DE 19645096 A1
- US 2011238331 A1
- CN 112065617 A
- US 2010017151 A1
- DE 102017006400 A1
- WO 2015078672 A1